# EUROPÄISCHE PATENTSCHRIFT

(11) **EP 3 713 799 B1**
(45) Veröffentlichungstag und Bekanntmachung des Hinweises auf die Patenterteilung: **08.02.2023**
(21) Anmeldenummer: 18815535.2
(22) Anmeldetag: 22.11.2018
(51) Int. Cl.: B60T 1/06, B60K 7/00

(54) **INTEGRIERTE ANTRIEBSEINHEIT MIT ELEKTRISCHEM ANTRIEB UND MECHANISCHER BREMSE**
INTEGRAL DRIVE UNIT WITH ELECTRICAL DRIVE AND MECHANICAL BRAKE
UNITÉ DE PROPULSION INTÉGRÉE AVEC PROPULSION ÉLECTRIQUE ET FREIN MÉCANIQUE

(30) Priorität: 24.11.2017 DE 102017221108
(43) Veröffentlichungstag der Anmeldung: 30.09.2020
(73) Patentinhaber: KNORR-BREMSE Systeme für Nutzfahrzeuge GmbH, 80809 München (DE)
(72) Erfinder: GEIS-ESSER, Daniel, 81377 München (DE); KOCH, Alexander, 81825 München (DE)
(86) Internationale Anmeldenummer: PCT/EP2018/082233
(87) Internationale Veröffentlichungsnummer: WO 2019/101861

(56) Entgegenhaltungen:
- WO-A1-2017/009512
- DE-A1-102009 035 176
- DE-A1-102010 030 827
- GB-A- 2 443 687
- US-A1- 2010 116 573

## Beschreibung

Die vorliegende Erfindung bezieht sich auf eine Einheit mit elektrischem Antrieb und mechanischer Bremse für ein Nutzfahrzeug und/oder für ein Schienenfahrzeug, sowie auf ein Verfahren zur Steuerung einer solchen Einheit.

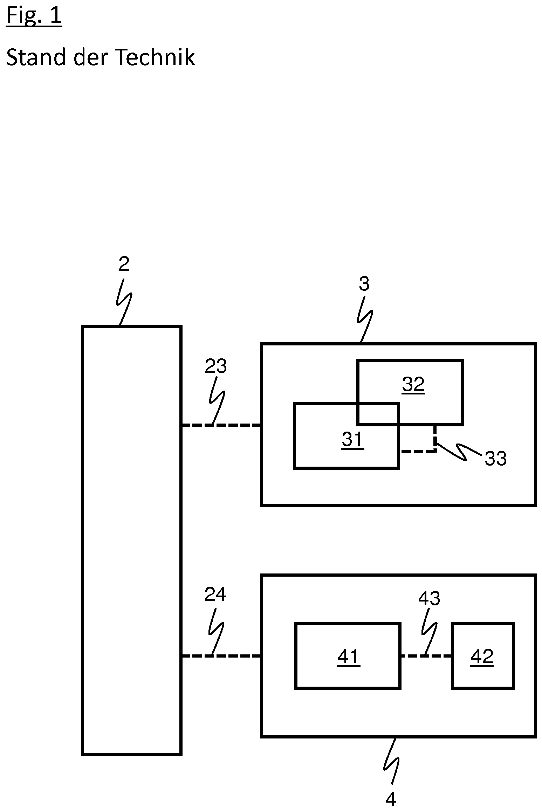

**Fig. 1** zeigt die übliche Anordnung einer Antriebseinheit und einer Bremseinheit mit deren Anbindungen an ein Rad gemäß des Standes der Technik in einer schematischen Darstellung, wie nachfolgend erklärt.

Üblicherweise sind für ein angetriebenes Rad 2 eine E-Antriebseinheit 3 sowie eine Bremseinheit 4 vorgesehen, die als separate Einheiten ausgebildet sind. Hierbei ist zwischen Rad 2 und E-Antriebseinheit 3 eine mechanische Verbindung 23 vorgesehen. Des Weiteren ist zwischen Rad 2 und Bremseinheit 4 eine zusätzliche mechanische Verbindung 24 vorgesehen. Die Verbindungen 23 und 24 sind dazu eingerichtet, Antriebs- und Bremskräfte zwischen Rad 2 und E-Antriebseinheit 3 bzw. Bremseinheit 4 zu übertragen.

Die E-Antriebseinheit 3 (gemäß des Standes der Technik) weist einen E-Antrieb 31 sowie ein Steuergerät 32 auf, das zum Steuern des E-Antriebs 31 vorgesehen ist. Hierfür sind der E-Antrieb 31 und das Steuergerät 32 mittels einer Verbindung 33 aneinander angebunden, um Energie und Signale zu übertragen.

Die Bremseinheit 4 (gemäß des Standes der Technik) weist eine mechanische Bremse 41 sowie eine eigene Bremssteuerung 42 auf, die zum Steuern der Bremse 41 vorgesehen ist. Hierfür sind die Bremse 41 und die Bremssteuerung 42 mittels einer Verbindung 43 aneinander angebunden, um Energie und Signale zu übertragen (also beispielsweise Daten, Strom, eventuell auch Hydraulikflüssigkeit oder Druckluft, und weitere Signale).

Im oben beschriebenen Stand der Technik sind E-Antriebseinheit 3 und Bremseinheit 4 voneinander getrennt vorgesehen, obwohl diese auf das gleiche Rad 2 wirken. Diese sind somit als Subsysteme anzusehen, die sowohl topologisch als auch systemisch voneinander getrennt sind. Hierdurch ergeben sich Probleme bei einem Zusammenspiel der beiden Subsysteme, insbesondere bei der Regelung bzw. Steuerung eines Bremsvorgangs. Des Weiteren werden im Stand der Technik viele Bauteile benötigt, aufgrund der voneinander getrennten Subsysteme, was teuer und aufwendig ist, sowie einen großen Bauraum erfordert. Insbesondere muss für jedes Subsystem ein eigenes Steuergerät vorgesehen werden.

Die DE 10 2010 030 827 A1 offenbart in diesem Zusammenhang Elektrofahrzeug mit einem Fahrzeugaufbau, wenigstens einer am Fahrzeugaufbau gelagerten und zumindest ein Fahrzeugrad aufweisenden Fahrzeugachse, wenigstens einem Elektromotor, mittels welchem das zumindest eine Fahrzeugrad antreibbar ist, und wenigstens einer mechanischen Radbremse, mittels welcher das zumindest eine Fahrzeugrad abbremsbar ist, wobei die mechanische Radbremse mit dem Elektromotor zu einer baulichen Einheit zusammengefasst ist.

Es ist eine Aufgabe der Erfindung, eine Vorrichtung sowie ein Verfahren vorzusehen, um die Nachteile des Standes der Technik zu beheben. Diese Aufgabe wird durch die unabhängigen Ansprüche gelöst.

Durch ein Ausführen der E-Antriebseinheit sowie der Bremseinheit (mechanische Bremse) als eine einzige Einheit wird Bauraum eingespart. Des Weiteren muss nur eine Verbindung zwischen der Einheit und dem Rad vorgesehen werden, welches angetrieben bzw. gebremst werden soll.

Vorzugsweise werden die E-Antriebseinheit sowie die Bremseinheit als integrierte und kompakte Einheit ausgeführt.

Erfindungsgemäß wird darüber hinaus der Rotor des E-Antriebs als Bauteil der mechanischen Bremse ausgebildet. Hierdurch werden Bauteile eingespart, was die Produktionskosten senkt. Bremse und E-Antrieb weisen folglich gemeinsame Teile auf. Dies bedeutet, dass ein Bauteil sowohl zum E-Antrieb gehört, als auch zur mechanischen Bremse. Dieses gemeinsame Bauteil ist in diesem Fall der Rotor des E-Antriebs. Auch weitere Bauteile können sowohl zum E-Antrieb, als auch zur mechanischen Bremse gehören.

Vorzugsweise wird ein gemeinsames Steuergerät vorgesehen, das zum Steuern der mechanischen Bremse und zum Steuern des E-Antriebs eingerichtet ist. Hierdurch werden Bauteile eingespart, nämlich ein weiteres Steuergerät. Des Weiteren wird hierdurch das Steuern bzw. das Regeln eines Bremsvorgangs vereinfacht. Ein einziges

Steuergerät für mechanische Bremse und E-Antrieb ist dazu in der Lage, mit geringem Rechenaufwand das Zusammenspiel zwischen mechanischer Bremse und E-Antrieb im Generatorbetrieb zu koordinieren, um die Abnutzung der mechanischen Bremse zu reduzieren. Denn mit dem E-Antrieb im Generatorbetrieb kann verschleißfrei gebremst werden. Somit koordiniert das gemeinsame Steuergerät das Zusammenspiel zwischen mechanischer Bremse und E-Antrieb vorzugsweise dahingehend, dass der Bremsbedarf zu einem maximalen Anteil durch den E-Antrieb im Generatorbetrieb gedeckt wird. Vorzugsweise wird die mechanische Bremse also nur dann eingesetzt, wenn unbedingt nötig (beispielsweise bei einer Vollbremsung, oder auf den letzten Metern vor dem Stillstand des Zuges bzw. des Nutzfahrzeugs).

Vorzugsweise weist die Einheit ein gemeinsames Gehäuse für wenigstens die E-Antriebseinheit und die Bremseinheit auf. Vorzugsweise ist auch das Steuergerät in dieses Gehäuse integriert.

Gemäß einer anderen Ausgestaltung ist das Steuergerät außerhalb des gemeinsamen Gehäuses angeordnet.

Vorzugsweise wird ein Getriebe für den E-Antrieb vorgesehen, um die Drehmomentcharakteristik des E-Antriebs in jedem Drehzahlbereich des Rads möglichst optimal zu nutzen. Hierdurch wird der Wirkungsgrad gesteigert, somit die Systemeffizienz maximiert. Das Getriebe ist vorzugsweise schaltbar.

Gemäß einer anderen Ausgestaltung ist das Getriebe vorzugsweise nicht schaltbar, sondern weist eine festgelegte Übersetzung auf.

Vorzugsweise weisen auch das Getriebe und der E-Antrieb gemeinsame Bauteile auf. Dies bedeutet, dass ein Bauteil sowohl zum E-Antrieb gehört, als auch zum Getriebe. Hierdurch werden Bauteile eingespart.

Vorzugsweise weisen auch das Getriebe und die mechanische Bremse gemeinsame Bauteile auf. Dies bedeutet, dass ein Bauteil sowohl zur mechanischen Bremse gehört, als auch zum Getriebe. Hierdurch werden Bauteile eingespart. Das gemeinsame Bauteil ist optional die letzte Getriebestufe.

Generell können aufgrund der erfindungsgemäßen Konstruktion möglichst viele Bauteile mehrere Funktionen erfüllen. Vorzugsweise werden somit auch weitere üblicherweise getrennt voneinander vorgesehene Bauteile miteinander kombiniert. Hierdurch wird die Anzahl der Bauteile reduziert, sowie Bauraum eingespart, da eine kompaktere Bauweise ermöglicht wird.

Vorzugsweise ist das Getriebe als Planetengetriebe ausgebildet. Hierdurch wird eine kompakte Bauart realisiert.

Vorzugsweise wird die Verbindung zwischen dem Rad und der erfindungsgemäßen Antriebs- und Verzögerungseinheit als schwingungsentkoppelte Welle ausgebildet. Hierdurch wird eine Schwingungsübertragung zwischen Rad und erfindungsgemäßer Antriebs- und Verzögerungseinheit verhindert oder wenigstens minimiert.

Vorzugsweise wird die Antriebs- und Verzögerungseinheit an dem Chassis eines Nutzfahrzeugs bzw. Schienenfahrzeugs montiert, wodurch die schwingende Masse reduziert wird.

Vorzugsweise wird die Antriebs- und Verzögerungseinheit direkt an dem Rad montiert, wodurch keine Welle zwischen Antriebs- und Verzögerungseinheit und Rad nötig ist.

Auch wenn eine Bremsanforderung durch ausschließliches Bremsen mit dem E-Antrieb im Generatorbetrieb umgesetzt werden kann, wird vorzugsweise auf den letzten Metern vor dem Stillstand des Zuges auch die mechanische Bremse aktiviert, oder vorzugsweise auf den letzten Metern vor dem Stillstand des Zuges ausschließlich mechanisch gebremst. Hierdurch ist ein exaktes Anhalten, d.h. genau auf dem dafür vorgesehenen Punkt, möglich.

Vorzugsweise wird bei einer Notbremsanforderung die mechanische Bremse sofort aktiviert, ohne ein vorheriges Prüfen, ob die Bremsanforderung auch alleine durch den E-Antrieb im Generatorbetrieb umgesetzt werden könnte. Hierdurch wird Zeit bzw. Fahrstrecke bei einer Notbremsung eingespart, da möglichst frühzeitig mit allen zur Verfügung stehenden Mitteln gebremst wird.

Vorzugsweise wird zwar möglichst oft und möglichst ausschließlich durch den E-Antrieb im Generatorbetrieb gebremst. Vorzugsweise wird allerdings zusätzlich mit der mechanischen Bremse gebremst, falls die durch den E-Antrieb im Generatorbetrieb in Strom umgewandelte Energie nicht verbraucht oder nicht abgeführt werden kann.

Gemäß einer anderen Ausgestaltung wird in dem oben beschriebenen Fall, falls die durch den E-Antrieb im Generatorbetrieb in Strom umgewandelte Energie nicht verbraucht oder nicht abgeführt werden kann, vorzugsweise ausschließlich mit der mechanischen Bremse gebremst.

Fig. 1 zeigt die übliche Anordnung einer Antriebseinheit und einer Bremseinheit mit deren Anbindung an ein Rad gemäß des Standes der Technik, wie bereits einleitend erklärt.

Fig. 2 zeigt ein Ausführungsbeispiel der erfindungsgemäßen Ausgestaltung.

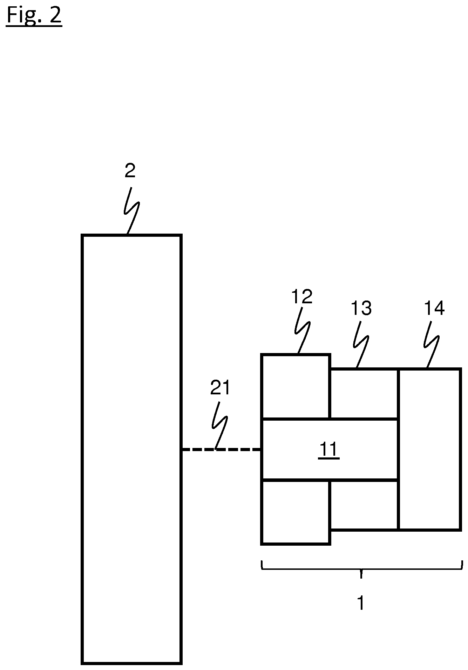

In der nachfolgenden Beschreibung der Fig. 2 wird insbesondere auf die Unterschiede zu der in Fig. 1 gezeigten Anordnung eingegangen. Auch Fig. 2 zeigt ein schematisch dargestelltes Rad 2. Des Weiteren ist eine erfindungsgemäße Antriebs- und Verzögerungseinheit 1 dargestellt. Zwischen Rad 2 und Antriebs- und Verzögerungseinheit 1 ist lediglich eine einzige Verbindung 21 vorgesehen, im Gegensatz zu zwei Verbindungen 23, 24 gemäß des Standes der Technik (siehe Fig. 1). Zentral innerhalb der Antriebs- und Verzögerungseinheit 1 ist ein E-Antrieb 11 angeordnet. Die hier gezeigte Ausführungsform weist ein optionales Getriebe 13 auf, welches angrenzend an die Bremse 12 und an den E-Antrieb 11 angeordnet ist. Falls das Rad 2 angetrieben werden soll, wird das von dem E-Antrieb 11 erzeugte Drehmoment über das Getriebe 13 geleitet, und von dort durch die Verbindung 21 zum Rad 2. Eine direkte Drehmoment-Übertragungsmöglichkeit von dem Getriebe 13 zu der Verbindung 21 ist in Fig. 2 zwar nicht dargestellt, kann aber trotzdem erfolgen. Fig. 2 ist lediglich als Prinzipdarstellung zu verstehen, die ein Beispiel für eine prinzipielle Anordnung der verschiedenen Bauteile zeigt.

Falls das Rad 2 gebremst werden soll, muss von der Antriebs- und Verzögerungseinheit 1 eine Bremskraft auf die Verbindung 21 aufgebracht werden. Dies geschieht, falls die Bremskraftanforderung hierdurch erfüllt werden kann, ausschließlich durch den E-Antrieb 11 im Generatorbetrieb. Falls die Bremswirkung des E-Antriebs 11 im Generatorbetrieb allerdings nicht ausreicht, wird zusätzlich eine Bremskraft durch die mechanische Bremse 12 aufgebracht.

Zum Steuern bzw. Regeln des Zusammenspiels von E-Antrieb 11 und mechanischer Bremse 12 weist die Antriebs- und Verzögerungseinheit 1 ein in diese integriertes Steuergerät 14 auf. Das Steuergerät 14 weist unter anderem Sicherheitsfunktionen auf, wie beispielsweise eine ABS- sowie ESP-Funktionalität (bei Nutzfahrzeugen) oder einen Gleitschutz (bei Schienenfahrzeugen).

### BEZUGSZEICHENLISTE

- 1: Antriebs- und Verzögerungseinheit
- 11: E-Antrieb
- 12: Bremse
- 13: Getriebe
- 14: Steuergerät (der Antriebs- und Verzögerungseinheit 1)

- 2: Rad
- 21: Verbindung zwischen Rad 2 und Antriebs- und Verzögerungseinheit 1
- 23: Verbindung zwischen Rad 2 und E-Antriebseinheit 3 (Stand der Technik)
- 24: Verbindung zwischen Rad 2 und Bremseinheit 4 (Stand der Technik)

- 3: E-Antriebseinheit (Stand der Technik)
- 31: E-Antrieb (Stand der Technik)
- 32: Steuergerät (Stand der Technik)
- 33: Verbindung zwischen E-Antrieb 31 und Steuergerät 32

- 4: Bremseinheit (Stand der Technik)
- 41: Bremse (Stand der Technik)
- 42: Bremssteuerung (Stand der Technik)
- 43: Verbindung zwischen Bremse 41 und Bremssteuerung 42

## Patentansprüche

1. Antriebs- und Verzögerungseinheit (1), aufweisend
eine mechanische Bremse (12), und
einen E-Antrieb (11), wobei
die mechanische Bremse (12) und der E-Antrieb (11) als Einheit zum Wirken auf eine einzige Radanbindung (21) vorgesehen sind,
**dadurch gekennzeichnet, dass** der Rotor des E-Antriebs (11) als Bauteil der mechanischen Bremse (12) ausgebildet ist.

2. Antriebs- und Verzögerungseinheit (1) gemäß Anspruch 1, des Weiteren aufweisend
ein gemeinsames Steuergerät (14), das sowohl zum Steuern der mechanischen Bremse (12) als auch zum Steuern des E-Antriebs (11) vorgesehen ist.

3. Antriebs- und Verzögerungseinheit (1) gemäß dem vorhergehenden Anspruch, die durch das Steuergerät (14) so steuerbar ist, dass eine Bremswirkung auf die Radanbindung (21) entweder
- durch die mechanische Bremse (12) alleine, oder
- durch den E-Antrieb (11) alleine, oder
- kombiniert durch mechanische Bremse (12) und E-Antrieb (11) aufbringbar ist.

4. Antriebs- und Verzögerungseinheit (1) gemäß einem der vorhergehenden Ansprüche, des Weiteren aufweisend ein Getriebe (13), das ebenfalls in die kombinierte und kompakte Einheit integriert ist.

5. Antriebs- und Verzögerungseinheit (1) gemäß dem vorhergehenden Anspruch, wobei das Getriebe (13) ein Teil des E-Antriebs (11) ist, und/oder die letzte Getriebestufe als Bauteil der mechanischen Bremse (12) ausgebildet ist.

6. Antriebs- und Verzögerungseinheit (1) gemäß einem der beiden vorhergehenden Ansprüche, wobei das Getriebe (13) als Planetengetriebe ausgebildet ist.

7. Antriebs- und Verzögerungseinheit (1) gemäß einem der vorhergehenden Ansprüche, wobei die mechanische Bremse (12) als Trommelbremse oder Scheibenbremse ausgebildet ist, und pneumatisch, hydraulisch oder elektromotorisch aktivierbar ist.

8. Antriebs- und Verzögerungseinheit (1) gemäß einem der vorhergehenden Ansprüche, die zur Verwendung in einem Nutzfahrzeug und/oder in einem Schienenfahrzeug geeignet ist.

9. Antriebs- und Verzögerungseinheit (1) gemäß einem der vorhergehenden Ansprüche, des Weiteren aufweisend eine Radanbindung (21), die als starre Welle oder als schwingungsentkoppelte Welle vorgesehen ist, wobei die Antriebs- und Verzögerungseinheit (1) zur Montage an einem Fahrzeugchassis geeignet ist.

10. Antriebs- und Verzögerungseinheit (1) gemäß einem der Ansprüche 1 bis 8, wobei die Antriebs- und Verzögerungseinheit (1) zur direkten Montage an einem Rad (2) vorgesehen ist.

11. Verfahren zum Steuern einer Antriebs- und Verzögerungseinheit (1) nach Anspruch 1 aufweisend eine mechanische Bremse (12), einen E-Antrieb (11) und ein Steuergerät (14), aufweisend die folgenden Schritte bei einer Bremsanforderung:
- Bremsen durch den E-Antrieb (11) im Generatorbetrieb, falls hierdurch eine Bremswirkung gemäß der Bremsanforderung erreichbar ist,
- zusätzliches Bremsen mit der mechanischen Bremse (12), falls die Bremswirkung gemäß der Bremsanforderung durch den E-Antrieb (11) alleine nicht erreichbar ist.

12. Verfahren gemäß dem vorhergehenden Anspruch, zusätzlich aufweisend den folgenden Schritt:
- falls ausschließliches Bremsen durch den E-Antrieb (11) im Generatorbetrieb zum Erfüllen der Bremsanforderung ausreichend ist, zusätzliches Bremsen mit der mechanischen Bremse (12) im letzten Bremsabschnitt vor Stillstand des Fahrzeugs.

13. Verfahren gemäß einem der vorhergehenden Verfahrensansprüche, zusätzlich aufweisend den folgenden Schritt:
- falls eine Notbremsanforderung vorliegt, sofortiges zusätzliches Aktivieren der mechanischen Bremse (12) ohne Prüfung, ob Bremswirkung gemäß der Bremsanforderung durch den E-Antrieb (11) im Generatormodus alleine erreichbar ist.

14. Verfahren gemäß einem der vorhergehenden Verfahrensansprüche, zusätzlich aufweisend den folgenden Schritt:
- falls die durch den E-Antrieb (11) im Generatorbetrieb in Strom umgewandelte Energie nicht verbraucht werden kann, zusätzliches Bremsen mit der mechanischen Bremse (12).

## Claims

1. Drive and deceleration unit (1), having
a mechanical brake (12), and
an e-drive (11), wherein
the mechanical brake (12) and the e-drive (11) are provided as a unit for acting on a single wheel connection (21)
**characterised in that** rotor of the e-drive (11) is designed as a component of the mechanical brake (12).

2. Drive and deceleration unit (1) according to claim 1, furthermore having
a common control device (14), which is provided both for controlling the mechanical brake (12) and for controlling the e-drive (11).

3. Drive and deceleration unit (1) according to the preceding claim, which can be controlled by the control device (14) so that a braking action can be applied to the wheel connection (21) either
- by the mechanical brake (12) alone, or
- by the e-drive (11) alone, or
- by a combination of the mechanical brake (12) and the e-drive (11).

4. Drive and deceleration unit (1) according to any of the preceding claims, furthermore having a gear (13), which is likewise integrated in the combined and compact unit.

5. Drive and deceleration unit (1) according to the preceding claim, wherein the gear (13) is part of the e-drive (11), and/or the final gear stage is designed as a component of the mechanical brake (12).

6. Drive and deceleration unit (1) according to one of the two of the preceding claims, wherein the gear (13) is designed as a planetary gear.

7. Drive and deceleration unit (1) according to any of the preceding claims, wherein the mechanical brake (12) is designed as a drum brake or a disc brake and can be activated pneumatically, hydraulically or electromotively.

8. Drive and deceleration unit (1) according to any of the preceding claims, which is suitable for use in a commercial vehicle and/or in a rail vehicle.

9. Drive and deceleration unit (1) according to any of the preceding claims, furthermore having
a wheel connection (21), which is provided as a rigid shaft or as a shaft which is decoupled from vibrations, wherein the drive and deceleration unit (1) is suitable for assembly on a vehicle chassis.

10. Drive and deceleration unit (1) according to any of claims' 1 to 8,
wherein the drive and deceleration unit (1) is provided for direct assembly on a wheel (2).

11. Method for controlling a drive and deceleration unit (1) according to claim 1 having a mechanical brake (12), an e-drive (11) and a control device (14), having the following steps upon a brake request:
- braking by the e-drive (11) in generator mode if a braking action corresponding to the brake request can be achieved thereby,
- additional braking via the mechanical brake (12) if the braking action corresponding to the brake request cannot be achieved by the e-drive (11) alone.

12. Method according to the preceding claim, additionally having the following step:
- if exclusive braking by the e-drive (11) in generator mode is sufficient to fulfill the brake request, additional braking via the mechanical brake (12) in the final braking section before the vehicle is at a standstill.

13. Method according to one of the preceding method steps, additionally having the following step:
- in the event of an emergency brake request, immediate additional activation of the mechanical brake (12) without checking whether the braking action corresponding to the brake request can be achieved by the e-drive (11) in generator mode alone.

14. Method according to one of the preceding method steps, additionally having the following step:
- if the energy converted into current by the e-drive (11) in generator mode cannot be used, additional braking via the mechanical brake (12).

## Revendications

1. Unité (1) de propulsion et de décélération, comportant
un frein (12) mécanique, et
une propulsion E (11), dans laquelle
le frein (12) mécanique et la propulsion E (11) sont prévus sous la forme d'une unité d'action sur une attache (21) unique de roue,
**caractérisée en ce que** le rotor de la propulsion E (11) est constitué comme pièce du frein (12) mécanique.

2. Unité (1) de propulsion et de décélération suivant la revendication 1, qui comporte en outre un appareil (14) de commande commun, qui est prévu tant pour commander le frein (12) mécanique que pour commander la propulsion E (11).

3. Unité (1) de propulsion et de décélération suivant la revendication précédente, qui peut être commandée par l'appareil (14) de commande, de manière à ce qu'un effet de freinage puisse être appliqué sur l'attache (21) de roue soit
- par le frein (12) mécanique seul, soit
- par la propulsion E (11) seule, soit
- de manière combinée par le frein (12) mécanique et la propulsion E (11).

4. Unité (1) de propulsion et de décélération suivant l'une des revendications précédentes, comportant en outre une transmission (13), qui est intégrée également dans l'unité combinée et ramassée.

5. Unité (1) de propulsion et de décélération suivant la revendication précédente, dans laquelle la transmission (13) est une partie de la propulsion E (11), et/ou le dernier étage de la transmission est constitué comme pièce du frein (12) mécanique.

6. Unité (1) de propulsion et de décélération suivant l'une des deux revendications précédentes, dans laquelle la transmission (13) est constituée sous la forme d'une transmission épicycloïdale.

7. Unité (1) de propulsion et de décélération suivant l'une des revendications précédentes, dans laquelle le frein (12) mécanique est constitué comme frein à tambour ou frein à disque et peut être activé pneumatiquement, hydrauliquement ou par moteur électrique.

8. Unité (1) de propulsion et de décélération suivant l'une des revendications précédentes, qui convient à l'utilisation dans un véhicule utilitaire et/ou dans un véhicule ferroviaire.

9. Unité (1) de propulsion et de décélération suivant l'une des revendications précédentes, comportant en outre
une attache (21) de roue, qui est prévue comme arbre rigide ou comme arbre découplé en vibration, dans lequel l'unité (1) de propulsion et de décélération est propre au montage sur un châssis de véhicule.

10. Unité (1) de propulsion et de décélération suivant l'une des revendications 1 à 8, dans laquelle
l'unité (1) de propulsion et de décélération est prévue pour le montage direct sur une roue (2).

11. Procédé de commande d'une unité (1) de propulsion et de décélération suivant la revendication 1, comportant un frein (12) mécanique, une propulsion E (11) et un appareil (14) de commande comportant les stades suivants, lors d'une demande de frein :
- freinage par la propulsion E (11) en fonctionnement en génératrice, si ainsi on peut obtenir un effet de freinage suivant la demande de freinage,
- freinage supplémentaire par le frein (12) mécanique, si l'effet de freinage suivant la demande de freinage ne peut pas être atteint seulement par la propulsion E (11).

12. Procédé suivant la revendication précédente, comportant en outre le stade suivant :
- si le freinage exclusivement par la propulsion E (11) en fonctionnement en génératrice suffit à satisfaire la demande de freinage, freinage supplémentaire par le frein (12) mécanique dans la dernière partie du freinage avant l'arrêt du véhicule.

13. Procédé suivant l'une des revendications de procédé précédentes, comportant en outre le stade suivant :
- s'il y a une demande de frein d'urgence, activation supplémentaire immédiate du frein (12) mécanique, sans contrôle du point de savoir si l'effet de freinage suivant la demande de freinage peut être atteint seulement par la propulsion E (11) en mode en génératrice.

14. Procédé suivant l'une des revendications précédentes, comportant en outre le stade suivant :
- si l'énergie transformée en courant par la propulsion E (11) en fonctionnement en génératrice ne peut pas être consommée, freinage supplémentaire par le frein (12) mécanique.
